Europäisches Patentamt

(19) European Patent Office

Office européen des brevets

(11) Publication number: **0 185 901**

**B1**

(12) **EUROPEAN PATENT SPECIFICATION**

(45) Date of publication of patent specification: **13.06.90**

(21) Application number: **85114251.3**

(22) Date of filing: **08.11.85**

(51) Int. Cl.⁵: **F 16 L 27/00, F 16 L 43/00**

(54) Joint coupling of telescopic type, for adjusting the trajectory angle in sprinklers in general, and a sprinkler provided with said joint coupling.

(30) Priority: **21.12.84 IT 4688884**

(43) Date of publication of application:
**02.07.86 Bulletin 86/27**

(45) Publication of the grant of the patent:
**13.06.90 Bulletin 90/24**

(84) Designated Contracting States:
**AT BE CH DE FR GB IT LI LU NL SE**

(56) References cited:
**DE-A-2 226 956**
**DE-C- 335 852**
**US-A-1 911 311**
**US-A-2 074 042**

(73) Proprietor: **Drechsel, Arno**
**4, Via Castel Mareccio**
**I-39100 Bolzano (IT)**

(72) Inventor: **Drechsel, Arno**
**4, Via Castel Mareccio**
**I-39100 Bolzano (IT)**

(74) Representative: **Corradini, Corrado**
**Studio Ing. C. CORRADINI & C. S.r.l. 4, Via Dante**
**Alighieri**
**I-42100 Reggio Emilia (IT)**

Courier Press, Leamington Spa, England.

## Description

The present industrial invention patent relates to a joint-coupling which enables the trajectory angle of sprinklers in general to be adjusted very rapidly and easily, even whyle the sprinklers are in operation.

As is known, in windy areas or on windy days currently available sprinklers have proved to be practically unusable because of the impossibility of suitably adjusting their trajectory angle as the wind intensity and direction changes.

In this respect, the use of existing irrigators in windy areas or on windy days is very difficult because of the influence of the wind on the jet, resulting in water losses, shifting of the jet towards undesirable areas, irregular water distribution over the areas to be irrigated, and consequent poor irrigation.

Moreover, said inefficient irrigation under the aforesaid conditions is worsened by the fact that very often the wind speed changes several times during the course of one day, so that if a particular trajectory angle is suitable for one determined wind speed, this same angle will certainly be unsuitable for another different wind speed.

This situation is currently remedied by using in such areas sprinklers which have a certain fixed trajectory angle but which are difficult to adapt to the contingent situation.

Consequently, there is a widespread requirement in this sector for an irrigator, or at least a device able to be associated with any irrigator of know type, by means of which it is possible to easily and rapidly adjust the trajectory angle even while the irrigator is in operation.

This would enable regular irrigation even when it is windy because with said adjustment the jet inclination, and thus also the jet throw, would be adapted to the force of the wind.

One type of coupling means is known, from US—A—2074042, comprising telescopic curved pipe parts hinged on a common pivot with locking means opposite the pivot.

Another type coupling means is disclosed in DE—A—2226956, where the end of a pipe is inserted into the receiving part of a body, some relative mutual swivel movement being permitted by said pipe end and receiving part, and seal means being provided to prevent leakage of water. No one of the above type of coupling means may be used in the field of irrigation, because of the high pressures of water and the vibrations and forces transmitted thereto.

The object of the present invention is to provide a joint coupling for sprinklers in general, having the necessary transverse rigidity for withstanding the vibrations and forces transmitted both by the jet deflector and by the thrust deflector of the irrigator, or by the other means provided for the right and left hand shifting of the irrigator, preventing in the meantime any water leakage. The scope above is attained by a joint coupling having the characteristics disclosed by the claim 1.

The coupling according to the invention particularly comprises two mutually communicating, consecutive pipe pieces provided with curved portions which are telescopically inserted under fluid-tight engagement one into the other, and which can mutually interpenetrate and withdraw in order to vary their angular position about a common pivot pin whose axis constitutes the centre of said curved portions, and which is therefore situated external to the pipe pieces, orthogonally to their plane of mutual swivel, and has a length at least as the length of the outer diameter of the external curved portion.

One curved portion is supported on the central region of the pivot pin, while the other portion is supported on the two end portions of the pivot pin.

Said pipe pieces, of tubular shape, can be either straight or curved beyond said curved portions, so that the invention can be mounted on a sprinkler in place of the elbow which connects together the water feed column and the propelling tube of the same.

In particular, according to the invention said two curved portions comprise an arched tubular element of male type and a tubular element of female type, both having the same average curvature, between said male and female elements there being interposed elastic seal means arranged to allow mutual sliding of said elements.

Furthermore, on the side of the coupling opposite to the one occupied by the hinging axis of the two pipe pieces, a device is provided for adjusting said pipe pieces and locking them in position, consisting for example of a screw-nut coupling. More advantageously, according to a preferred embodiment said device consists of a through pin held elastically in position and locking together two plates associated with said pipe pieces, in one plate there being provided a hole and in the other there being provided a slot. The centre of curvature of said slot falls on the common axis of mutual swivel of the two pipe pieces, and in the sides of the slot widened portions can be provided arranged to define a like number of predetermined swivel positions, and which receive the widened head of said pin.

The aforesaid constructional solution therefore makes it possible, and extremely simple, to adjust the trajectory angle of the relevant sprinkler even while it is in operation, and the invention has the necessary transverse rigidity for withstanding the vibrations and forces transmitted both by the jet deflector and by the thrust deflector, or by other means provided for the right and left hand shifting of the sprinkler.

The characteristics and constructional merits of the invention will be more apparent from the description given hereinafter with reference to the figures of the accompanying drawings, which illustrate a preferred embodiment thereof by way of non-limiting example.

Figure 1 is a partly sectional side view of the invention.

Figure 2 is a section on the line II-II of Figure 1.

Figure 3 is a section on the line III-III of Figure 1.

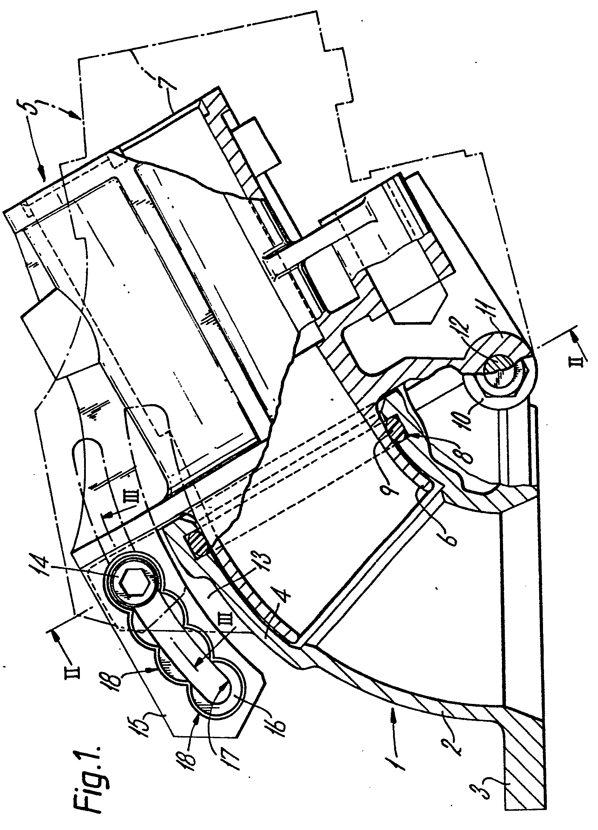

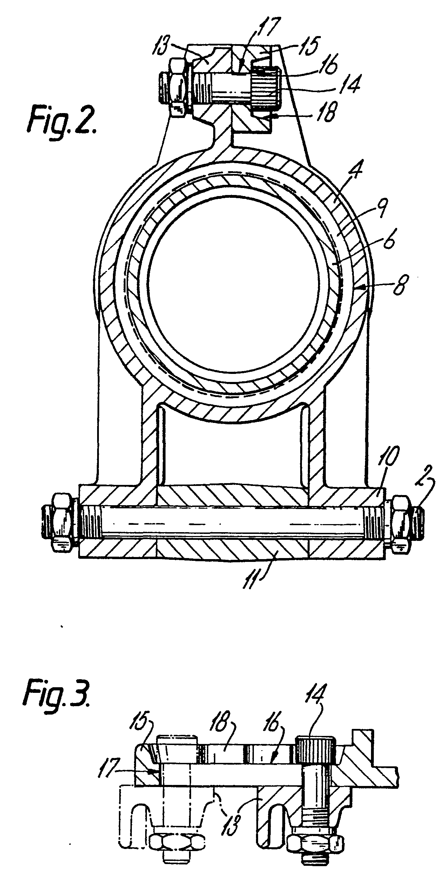

Said figures show a first curved tubular element or pipe piece 1 (Figure 1) of circular cross-section (Figure 2), comprising a connection part 2 provided with a terminal flange 3, and a curved coupling part 4. The water feed column, not shown, is connected to flange 3.

A second pipe piece, indicated overall with 5, is provided comprising a curved coupling part 6 which is inserted into curved part 4 of pipe piece 1, and a final straight part 7 to which the propelling tube of the sprinkler is fixed.

The inner surface of curved part 6 constitutes the direct continuation of the bore through connection part 2 of pipe piece 1.

It will be apparent that said two pipe pieces form, as shown, a coupling which replaces the usual rigid curve provided between the feed column and propelling tube of a normal sprinkler.

In this respect, as stated, final straight part 7 of pipe piece 5 is designed for receiving of and fixing to the propelling tube (not shown), and flange 3 of pipe piece 1 is designed for fixing to the normal bearing device interposed between said propelling tube and the corresponding water feed column, also not shown.

With further reference of Figure 1, it can be seen that said two curved parts 4, 6 are telescopically coupled with each other, and in proximity to the free end of the outer curved part 4 a circumferential groove 8 is internally provided which acts as a seat for an elastic seal ring 9, the inner generating lines of which rest against the outer surface of the inner curved part 6.

The ring 9 can alternatively be disposed on the outside of said inner curved part 6.

As shown, on the inward side of the connector, flange 3 comprises a fork 10, between the arms of which a bored appendix 11 is inserted which branches from second pipe piece 5.

A hinge pivot 12 is inserted through the aligned bores of said arms and appendix 10, 11, to allow mutual swivelling of the pipe pieces 1, 5. Said pivot 12 is therefore disposed orthogonally to the plane of swivel of these latter, and has its axis on the common centre of curvature of curved parts 4 and 6.

As also shown in Figures 2 and 3, on the outward side of the coupling, ie on the opposite side of the one occupied by pivot 12, pipe piece 1 comprises a profiled lug 13 provided with a through hole through which freely passes a pin 14 parallel to axis 12 and provided with a widened head.

Said profiled lug 13 is situated (see Figure 2) on one side of the central plane of swivel of the connector, while on the other side of said plane a projecting plate 15 is provided branching form the pipe piece 5.

The two facing surfaces of lug 13 and plate 15 are disposed in practically mutual contact, and on the opposite face of the plate 15 an elongated arched cavity 16 is provided with its centre of curvature on the axis of 12.

At the base of said cavity 16 an arched slot 17 with the same average curvature as cavity 16 is provided centrally.

As is clearly shown in the figures, cavity 16 receives the widened head of pin 14, the shank of which passes through slot 17 and through the hole in lug 13, beyond which pin 14 comprises a thread on which a locking/ release nut is screwed.

Finally, the lateral surface of cavity 16 comprises a succession of recesses 18 of slightly conical surface to provide four equidistant seats for receiving the head of the pin 14, ie four predetermined selection positions for the inclination between the pipe pieces 1 and 5.

It is obvious that the length of slot 17 and the number of seats 18 can vary.

In Figure 1, the range of swivel is about 18°, with an angle of about 6° between two successive swivel positions.

From tests carried out, it has been found that the degree of adjustment offered, relative to the normal trajectory angle of a sprinkler propelling tube to a horizontal position, is sufficient to adapt the jet to a multiplicity of wind situations.

Finally, it is apparent that the widened head of pin 14 could be allowed to slide in a continuously adjustable way into cavity 17, to obtain a very subtle selection of the trajectory angle.

**Claims**

1. A joint coupling to be interposed between the water feed column and the propelling tube of a normal sprinkler, of the type comprising two consecutive, intercommunicating pipe pieces (1, 5) provided with two curved parts (4, 6) which are inserted slidingly into each other and are hinged on a common pivot pin (12) and have adjustable mutual locking means in a position opposite to the position of said pivot pin characterized by seal means being interposed between the curved parts and by the said pivot pin having a length at least as great as the length of the outer diameter of the external curved part (4), the inner pipe part being supported on the central region of the pivot pin, and the outer pipe part being supported on the two end portions of the pivot pin.

2. A coupling as claimed in claim 1, characterized in that said adjustable mutual locking means comprise a lug (13) and a plate (15) which face each other and are fixed respectively to pipe piece (1) and to pipe piece (5), there being provided a through clamping pin (14) inserted through a hole in the lug (13) and through an arched slot (17) provided in plate (15) and having its centre of curvature coinciding with hinge pivot (12).

3. A coupling as claimed in claim I, characterized in that through pin (14) comprises a widened head at one end, and slot (17) comprises a number of equidistant recessed seats for receiving said widened head, the other end of through pin (14) being provided with a threaded portion and a relative locking nut.

**Patentansprüche**

1. Gelenkkupplung zum Einschieben zwischen eine Wasserzufuhrsäule und des Antriebsrohres eines herkömmlichen Sprengers, welcher zwei aufeinanderfolgende ineinandereingreifende Rohrstücke (1, 5) aufweist, die mit zwei gekrümmten Teilen (4, 6) versehen sind, die verschiebbar ineinander eingesetzt und mit einem gemeinsamen Gelenkzpafen (12) gelenkig verbunden sind und einstellbare gegenseitige Verschlußeinrichtungen in einer der Position des Gelenkzapfens entgegengesetzten Position aufweisen, gekennzeichnet durch eine zwischen die gekrümmten Teile eingeschobene Dichtungseinrichtung und durch den Gelenkzapfen, der eine Länge aufweist, die mindestens so groß ist wie die Länge des Außendurchmessers des äußeren gekrümmten Teiles (4), wobei das innere Rohrteil im zentralen Bereich des Gelenkzapfens angeordnet ist, und das äußere Rohrteil an den zwei Endabschnitten des Gelenkzapfens.

2. Kupplung nach Anspruch 1, dadurch gekennzeichnet, daß die einstellbare gegenseitige Verschlußeinrichtung einen Sitz (13) und eine Platte (15) aufweist, die einander gegenüberliegen und die an dem Rohrstück (1) bzw. (5) fest angeordnet sind, und wobei dort ein Durchgangsklemmbolzen (14) in einer Bohrung des Sitzes (13) und durch einen in der Platte (15) vorgesehenen gebogenen Schlitz (17) eingesetzt ist, und der seinen Krümmungsmittelpunkt übereinstimmend mit dem Gelenkzapfen (12) besitzt.

3. Kupplung nach Anspruch 1, dadurch gekennzeichnet, daß der Durchgangsbolzen (14) einen erweiterten Kopf an einem Ende aufweist, und daß der Schlitz (17) eine Anzahl von in gleichem Abstand zueinander angeordneten ausgesparten Sitzen zur Aufnahme des erweiterten Kopfes aufweist, wobei das andere Ende des Durchgangsbolzens (14) mit einem Gewindeabschnitt und einer entsprechenden Sperrmutter versehen ist.

## Revendications

1. Raccord prévu pour être interposé entre la colonne d'alimentation en eau et le tube propulseur d'un arroseur normal du type comportant deux pièces formant tuyau consécutives intercommunicantes (1, 5) prévues avec deux parties incurvées (4, 6) qui sont insérées en coulissement à l'intérieur l'une de l'autre et sont articulées sur une broche de pivotement commune (12) et comportent des moyens de verrouillage mutuels ajustables dans une position en vis à vis par rapport à la position de ladite broche formant pivot caractérisé par des moyens d'étanchéité qui sont interposés entre les parties incurvées et par le fait que ladite broche formant pivot a une longueur qui est au moins aussi grande que la longueur du diamètre extérieur de la partie incurvée externe (4), la pièce formant tuyau interne étant supportée par la partie centrale de la broche formant pivot et la partie formant tuyau extérieur étant supportée sur les deux parties formant extrémités de la broche formant pivot.

2. Raccord tel que revendiqué à la revendication 1 caractérisé en ce que lesdits moyens de verrouillage mutuels ajustables comportent une patte (13) et une plaque (15) qui se trouvent en vis à vis et sont fixées respectivement à la pièce formant tuyau (1) et à la pièce formant tuyau (5), une broche de serrage (14) étant prévue à travers un trou ménagé dans la patte (13) et à travers une fente arquée (17) ménagée dans la plaque (15) et dont le centre de courbure coincide avec le pivot formant charnière (12).

3. Raccord tel que revendiqué à la revendication 1 caractérisé en ce que la broche (14) comporte une tête élargie à une de ses extrémités et la fente (17) comporte un certain nombre de sièges équidistants en dépression destinés à recevoir ladite tête élargie, l'autre extrémité de la broche (14) étant prévue avec une partie filetée associée à un écrou de blocage.

Fig.1.

EP 0 185 901 B1

Fig.2.

Fig.3.